# FASCICULE DE BREVET EUROPEEN

(11) **EP 1 245 853 B1**
(45) Date de publication et mention de la délivrance du brevet: **12.10.2005**
(21) Numéro de dépôt: 02290763.8
(22) Date de dépôt: 27.03.2002
(51) Int. Cl.: F16F 9/02, F16F 9/56, E05C 17/04

(54) **Dispositif d'assistance à l'ouverture ou à la fermeture d'un ouvrant et véhicule comportant un tel dispositif**
Unterstützungsvorrichtung zum Öffnen oder Schliessen eines Flügels und Fahrzeug mit einer solchen Vorrichtung
Assistance device for opening or closing a wing and vehicle comprising such a device

(30) Priorité: 29.03.2001 FR 0104262
(43) Date de publication de la demande: 02.10.2002
(73) Titulaire: Peugeot Citroen Automobiles, 92200 Neuilly Sur Seine (FR)
(72) Inventeur: Brocal, Sylvain, 90400 Dorans (FR)
(74) Mandataire: De Cuenca, Emmanuel Jaime

(56) Documents cités:
- DE-A- 3 826 862
- DE-A- 19 532 510
- DE-A- 19 806 500
- DE-C- 4 029 953
- DE-U- 29 915 867
- JP-A- 56 049 436
- US-A- 4 309 027
- US-A- 5 529 148
- PATENT ABSTRACTS OF JAPAN vol. 2000, no. 01, 31 janvier 2000 (2000-01-31) & JP 11 294508 A (UNISIA JECS CORP), 29 octobre 1999 (1999-10-29)

## Description

L'invention se rapporte à dispositif d'assistance à l'ouverture ou la fermeture d'un ouvrant tel qu'un hayon de véhicule automobile, ainsi qu'à un véhicule comportant un tel dispositif.

L'invention concerne plus particulièrement un dispositif d'assistance, du type vérin comportant un piston situé à l'extrémité d'une tige et coulissant à l'intérieur d'un cylindre contenant un fluide ainsi que des moyens de maintien du vérin dans au moins une position de déploiement intermédiaire stable entre les positions de fin de course extrêmes.

De tels dispositifs d'assistance sont prévus pour permettre à l'utilisateur d'un véhicule de disposer l'ouvrant dans au moins une position intermédiaire stable ayant un débattement réduit par rapport à l'état d'ouverture maximale. Ces positions intermédiaires sont prévues, par exemple, pour éviter au hayon de heurter un plafond bas. Des moyens connus de maintien d'un hayon en position intermédiaire sont constitués de déformations locales ou de surépaisseurs formées dans le vérin pour créer des « points durs » dans les mouvements du vérin.

Cependant, ces dispositifs s'usent rapidement et peuvent provoquer des blocages intempestifs du vérin ou des bruits désagréables pour l'utilisateur. Par ailleurs, les positions intermédiaires ainsi créées sont fixes et inadaptées à certaines situations d'utilisation du véhicule.

Le document US-A-5 529 148 décrit un dispositif selon le préambule de la revendication principale.

Un but de la présente invention est de proposer un dispositif d'assistance à l'ouverture ou la fermeture d'un ouvrant, palliant tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé par les caractéristiques de la partie caractérisante de la revendication 1.

Par ailleurs, l'invention peut comporter l'une ou plusieurs des caractéristiques suivantes :
- le dispositif comporte des moyens élastiques d'amortissement disposés entre l'organe support et la tige, respectivement le cylindre, aptes à autoriser un faible débattement relatif entre ces derniers,
- le premier organe de verrouillage est bloqué longitudinalement par deux butées portées par le cylindre, respectivement la tige, et situées de part et d'autre du premier organe de verrouillage,
- les moyens de verrouillage comportent un second organe de verrouillage apte à coulisser longitudinalement sur le cylindre, respectivement sur la tige,
- le second organe de verrouillage a la forme générale d'une bague apte à être déplacée en rotation autour de son axe sensiblement confondu avec l'axe longitudinal du vérin, pour faire coopérer en accrochage ou non au moins une portion de la bague avec l'organe de support afin de définir les positions active et inactive,
- les moyens de verrouillage sont disposés sur un carter fixé sur le cylindre, respectivement sur la tige, le carter coopérant en coulissement avec l'organe support lors des déplacements du vérin et étant conformé pour permettre aux moyens de verrouillage de coopérer au moins partiellement avec l'organe de support,
- l'organe support comporte une ligne crantée telle qu'une crémaillère qui s'étend sur au moins une partie de la longueur de la tige, respectivement du cylindre, la ligne crantée étant prévue pour permettre l'accrochage des moyens de verrouillage dans une pluralité de positions longitudinales déterminées.

Un autre but de l'invention est de proposer un véhicule comportant un hayon et au moins un dispositif d'assistance à l'ouverture ou à la fermeture conforme à l'une quelconque des caractéristiques précédentes.

D'autres particularités et avantages apparaîtront à la lecture de la description ci-après, faite en référence aux figures dans lesquelles :
- la figure 1 représente une vue de face d'un exemple de réalisation d'un dispositif d'assistance conforme à l'invention,
- la figure 2 représente une section transversale du dispositif d'assistance selon la ligne AA de la figure 1,
- la figure 3 représente une vue en coupe longitudinale du dispositif d'assistance selon la ligne BB de la figure 2,
- la figure 4 représente une vue en perspective éclatée d'une partie du dispositif d'assistance de la figure 1,
- la figure 5 représente une vue en coupe longitudinale agrandie d'une première extrémité du dispositif d'assistance selon l'invention,
- la figure 6 représente une vue en coupe longitudinale agrandie d'une seconde extrémité du dispositif d'assistance selon l'invention dans un premier état d'utilisation,
- la figure 7 représente une vue en coupe longitudinale agrandie de la seconde extrémité du dispositif d'assistance selon l'invention dans un second état d'utilisation,
- la figure 8 représente une vue de côté de la partie arrière d'un véhicule automobile comportant un hayon schématiquement illustré dans deux positions intermédiaires d'ouverture et comportant un dispositif d'assistance conforme à l'invention.

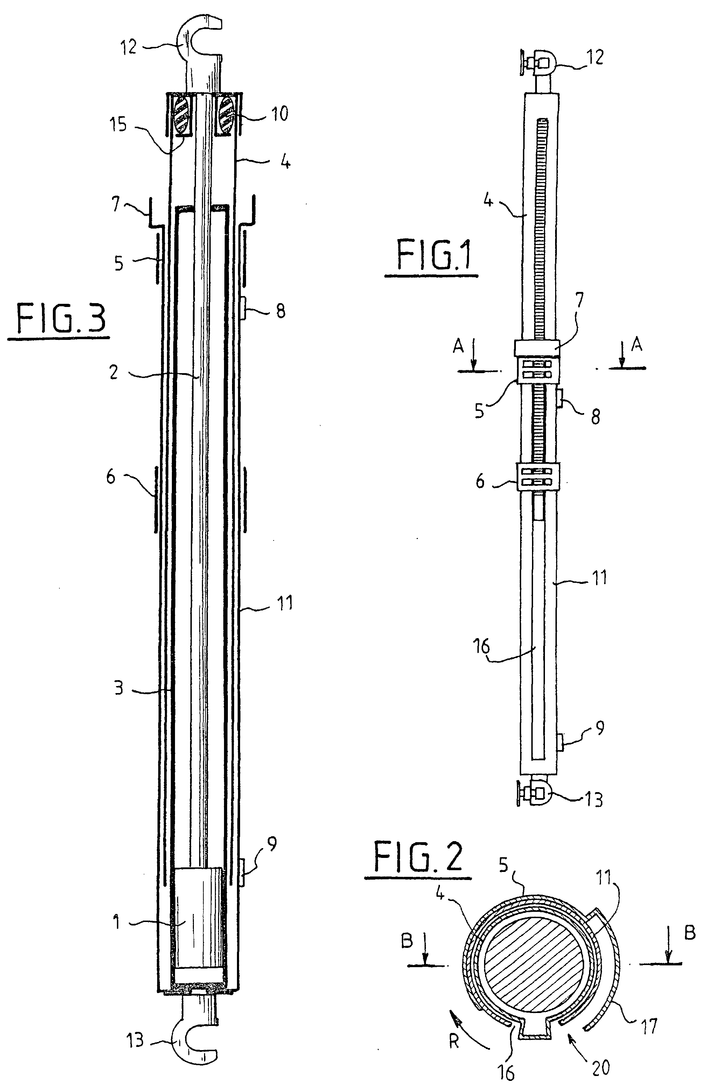

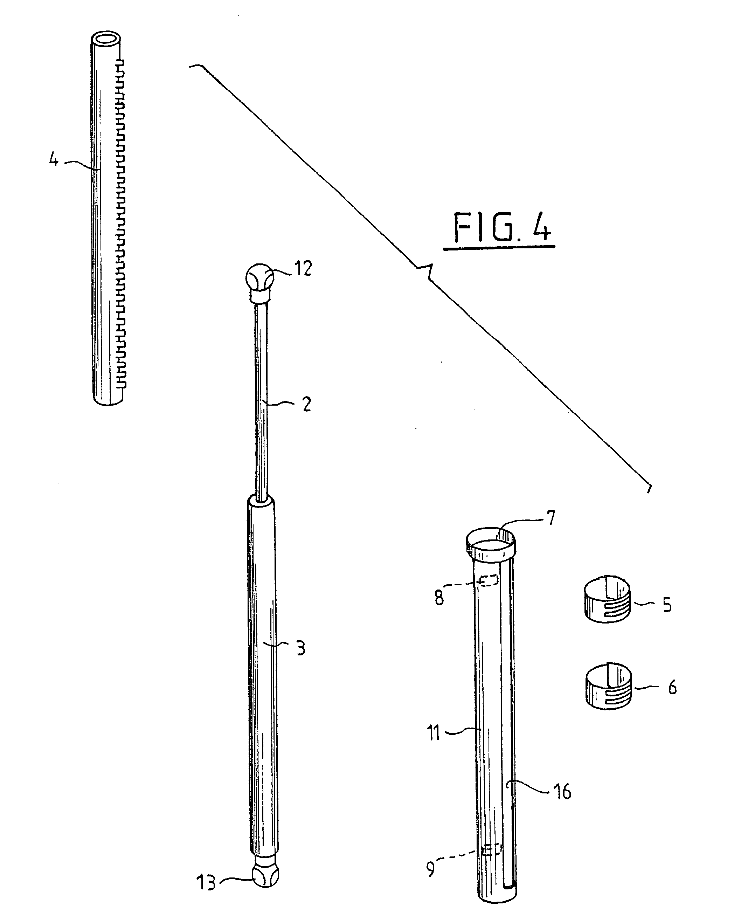

En se référant aux figures 1 à 7, le dispositif d'assistance à l'ouverture ou la fermeture d'un ouvrant est du type vérin. C'est-à-dire qu'il comporte un piston 1 situé à l'extrémité d'une tige 2 et coulissant à l'intérieur d'un cylindre 3 contenant un fluide, de préférence gazeux.

Classiquement, les extrémités 12, 13 de la tige 2 et du cylindre 13 formant les extrémités du vérin sont pourvues chacune d'une articulation à rotule 12, 13.

Selon l'invention, le dispositif d'assistance comprend des moyens de maintien du vérin dans au moins une position de déploiement intermédiaire stable entre les positions de butées de fin de course extrêmes. Les moyens de maintien comportent un organe 4 support rendu solidaire de la tige 2. L'organe support 4 a la forme générale d'un tube cylindrique pourvu d'une ligne crantée longitudinale telle qu'une crémaillère.

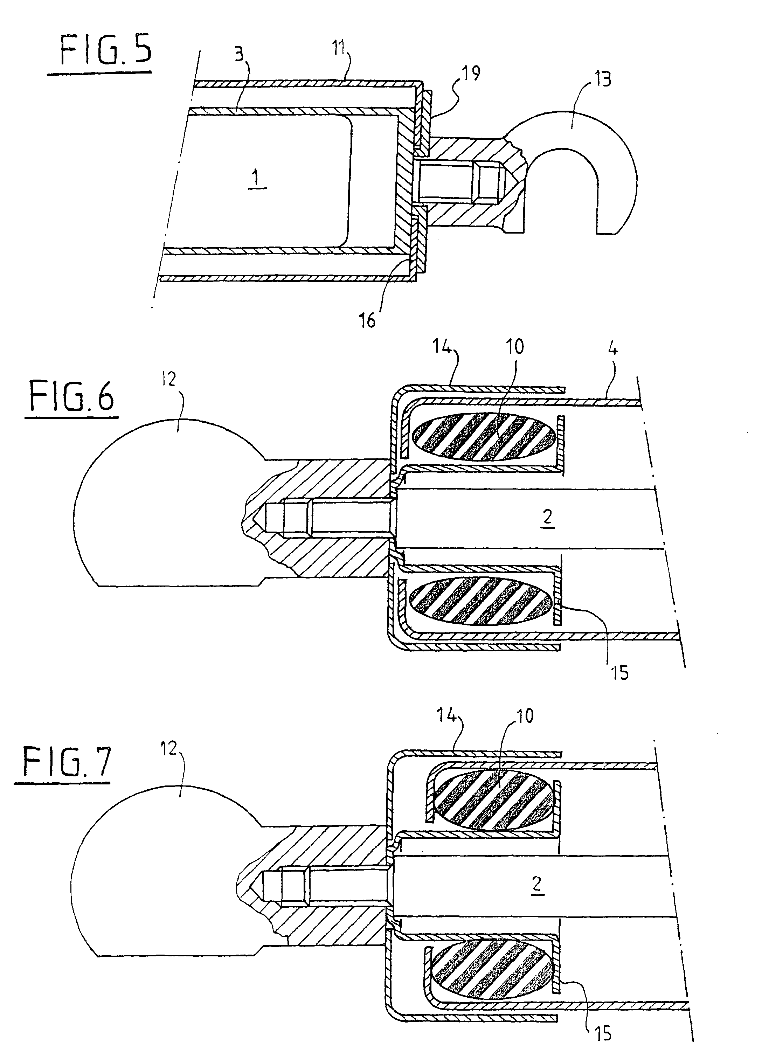

L'organe 4 support est enfilé sur la tige 2 et fixé à celle-ci au niveau de l'articulation 12 correspondante. Plus précisément, l'extrémité de l'organe 4 support est courbée vers la tige 2, par exemple par emboutissage, et maintenue entre d'une part une première coupelle fixe 14 et, d'autre part, un joint 10 torique déformable (figures 6 et 7). Le joint 10 est maintenu dans la direction opposée à l'articulation 12 au moyen d'une seconde coupelle 15 fixée à l'extrémité de la tige 2. La seconde coupelle 15 a la forme générale d'un tube cylindrique. Une première extrémité de la seconde coupelle 15 est prise en sandwich entre l'articulation 12 et l'extrémité de la tige 2 qui est vissée dans l'articulation 12. La seconde extrémité de la seconde coupelle 15 est courbée à 90 degrés environ vers l'organe 4 support et définie ainsi un épaulement de maintien axial du joint 10.

La première coupelle 14 fixe a la forme générale d'un capuchon dont une première extrémité est prise en sandwich entre l'articulation 12 et la seconde coupelle 15. La seconde extrémité de la première coupelle 14 s'étend autour de l'extrémité de l'organe 4 support.

Le carter 11 a la forme générale d'un tube cylindrique dont une extrémité 16 est courbée vers l'intérieur, pour permettre son serrage entre une extrémité du cylindre 3 et une troisième coupelle 19 fixe ayant la forme générale d'un disque. L'articulation 13 est vissée sur une extrémité filetée du cylindre 3 et assure le maintien de la troisième coupelle 19 contre la base du carter 11.

Les moyens de verrouillage comportent deux bagues 5, 6 enfilées sur le corps du carter 11 ayant sensiblement la forme d'anneaux ouverts sur une partie 20 de leur circonférence. Une première bague 5 est bloqué longitudinalement sur le carter 11 entre deux butées 7, 8. Une première butée est constituée par un collet 7 formé à l'extrémité du carter 11 opposée à l'articulation 13. La seconde butée est constituée, par exemple, d'un ergot 8 formé sur la surface du carter 11.

La seconde bague 6 de verrouillage est apte à coulisser sur le carter 11 entre la seconde butée 8 et une troisième butée 9 formée à proximité de l'autre extrémité du carter 11.

Le carter 11 est conformé pour coopérer en coulissement avec l'organe 4 support lors des mouvements du vérin 2, 3. En particulier, l'organe 4 support peut coulisser entre le cylindre 3 et le carter 11. Par ailleurs, le carter 11 comporte une lumière 16 longitudinale conformée pour autoriser la crémaillère à faire saillie sur la surface périphérique du carter 11 et permettre aux bagues 5, 6 de verrouillage de coopérer avec cette dernière.

A cet effet, les deux bagues 5, 6 de verrouillage sont aptes à être déplacées manuellement en rotation autour de leur axes respectifs qui sont sensiblement confondus avec l'axe longitudinal du vérin. De cette façon, un flanc 17 de la bague peut venir s'accrocher ou non sur la crémaillère de l'organe support 4.

Lorsque l'ouverture 20 de la bague 5, 6 coïncide avec la crémaillère, la bague est dite en position inactive (figure 2), et lorsqu'elle la bague 5, 6 est accrochée sur la crémaillère elle est dite en position active. Le passage de la position inactive à la position active (et vis-et-versa) peut être obtenu, par exemple, en faisant tourner la bague 5, 6 d'un quart de tour environ (cf. flèche R, figure 2).

Lorsque les deux bagues 5, 6 de verrouillage sont en position inactive, le hayon 18 a un fonctionnement habituel.

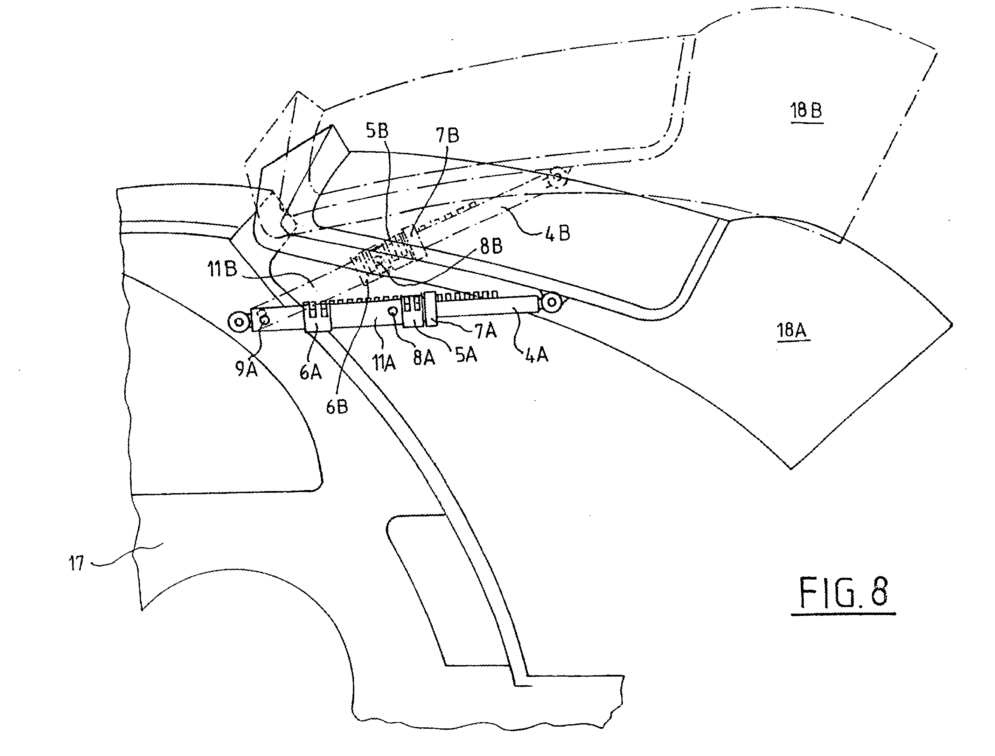

Un exemple de fonctionnement de l'invention va à présent être décrit en référence notamment à la figure 8.

Lorsque l'utilisateur souhaite bloquer le hayon 18 du véhicule 17 dans une première position déterminée, il dispose la première bague 5A en position active. De cette façon, l'organe support 4A est solidaire en translation de la première bague 5A qui est bloquée sur le carter 11A (figure 8, hayon 18A en position basse). Le vérin est ainsi bloqué dans un sens comme dans l'autre et maintien le hayon 18A dans une position fixe déterminée par les positions relatives de l'organe support 4A et du carter 11A.

L'utilisateur peut ainsi utiliser cette première bague 5 pour maintenir le hayon 18A dans une position semi-ouverte, ou faiblement ouverte pour permettre, par exemple, le transport d'objets encombrants. Le dispositif remplace ainsi avantageusement, l'utilisation habituelle et approximative de sangles attachées entre le volet et la structure du véhicule.

Lorsque l'utilisateur du véhicule souhaite limiter l'amplitude de l'ouverture du volet 18, il dispose manuellement la seconde bague 6 en position active et dans une position déterminée sur la crémaillère de l'organe 4 support (la première butée 5 étant en position inactive).

De cette façon, la seconde bague 6 est solidaire en translation de l'organe support 4. Lors de l'ouverture du hayon 18, l'organe 4 support coulisse dans le carter 11 jusqu'à ce que la seconde bague 6B arrive en butée contre la seconde butée 8B. Ainsi, le hayon 18B a une amplitude d'ouverture limitée et déterminée par la position de la seconde bague 6 par rapport à la crémaillère de l'organe 4 support (figure 8). La ligne crantée permet l'accrochage de la seconde bague 6 de verrouillage dans une pluralité de positions longitudinales déterminées.

De cette manière, l'invention peut permettre de limiter l'ouverture de l'ouvrant pour éviter de heurter un plafond trop bas ou faciliter son utilisation pour une personne de petite taille.

Les moyens d'amortissement (joint 10) décrits ci-dessus interposés à la base de la tige 2 et de l'organe 4 support assurent un amortissement de fin de course lorsque le vérin arrive dans sa position maximale d'ouverture. En effet, le joint 10, constitué par exemple d'élastomère, autorise un faible débattement relatif entre l'organe 4 support et la tige 2.

La figure 7 illustre une phase de compression du joint 10 lorsque le vérin arrive en butée d'ouverture, l'organe 4 support se déplace légèrement par rapport à la tige 2 en direction du piston 1.

On conçoit donc aisément que le dispositif selon l'invention, tout en étant de structure simple, permet de pallier les inconvénients de l'art antérieur et offre de multiples possibilités d'utilisation. En particulier, il peut être envisagé de disposer des repères visuels facilitant le choix de la position de la seconde bague 6 de verrouillage sur l'organe 4 support, pour définir des ouvertures maximales déterminées.

Bien entendu, l'invention ne saurait se limiter à l'exemple de réalisation décrit ci-dessus. Ainsi, les moyens d'amortissement peuvent être omis. De même, on peut envisager de monter l'organe 4 support sur le cylindre et les moyens 5, de verrouillage sur la tige 2. De plus, une seule bague de verrouillage ou des moyens de verrouillage supplémentaires peuvent être envisagés.

En outre, on peut envisager un dispositif dépourvu d'organe support, dans ce cas les moyens de verrouillage portés par la tige, ou le cylindre, peuvent s'accrocher directement sur le cylindre, respectivement sur la tige.

Par ailleurs, l'invention peut s'appliquer à tout autre type d'ouvrant comme, par exemple, à un volet de capot de véhicule.

Enfin, bien que l'invention ait été décrite en liaison avec des modes de réalisation particuliers, elle comprend tous les équivalents techniques des moyens décrits.

## Revendications

1. Dispositif d'assistance à l'ouverture ou la fermeture d'un ouvrant tel qu'un hayon de véhicule automobile, du type vérin comportant un piston (1) situé à l'extrémité d'une tige (2) et coulissant à l'intérieur d'un cylindre (3) contenant un fluide, des moyens de maintien du vérin (1, 2, 3) dans au moins une position de déploiement intermédiaire stable entre les positions de butées de fin de course extrêmes, les moyens de maintien comportant des moyens (5, 6) de verrouillage portés par le cylindre (3), respectivement la tige (2), les moyens (5, 6) de verrouillage étant aptes à être disposés sélectivement dans une position active ou une position inactive correspondant respectivement à une solidarisation en translation ou non avec la tige (2), respectivement le cylindre (3), et aptes à bloquer le déploiement du vérin (1, 2, 3) dans une position déterminée,
les moyens de maintien comportant un organe (4) support solidaire de la tige (2), ou respectivement du cylindre (3), les moyens (5, 6) de verrouillage étant aptes à être disposés sélectivement dans une position active ou une position inactive correspondant respectivement à une solidarisation ou non avec l'organe de support (4), les moyens de maintien comportant au moins une butée (7, 8) portée par le cylindre (3), respectivement la tige (2), et apte à bloquer le déplacement des moyens (5, 6) de verrouillage, pour limiter le déploiement du vérin (1, 2, 3) à une position déterminée, les moyens (5, 6) de verrouillage comportant un premier organe (5) de verrouillage bloqué longitudinalement relativement au cylindre (3), respectivement à la tige (2) **caractérisé en ce que** le premier organe (5) de verrouillage a la forme générale d'une bague apte à être déplacée en rotation autour de son axe sensiblement confondu avec l'axe longitudinal du vérin (2, 3), pour faire coopérer en accrochage ou non au moins une portion (17) de la bague (5) avec l'organe de support (4) afin de définir les positions active ou inactive.

2. Dispositif selon la revendication 1, **caractérisé en ce qu'**il comporte des moyens (10) élastiques d'amortissement disposés entre l'organe (4) support et la tige (2), respectivement le cylindre (3), aptes à autoriser un faible débattement relatif entre ces derniers.

3. Dispositif selon la revendication 1 **caractérisé en ce que** le premier organe (5) de verrouillage est bloqué longitudinalement par deux butées (7, 8) portées par le cylindre (3), respectivement la tige (2), et situées de part et d'autre du premier organe (5) de verrouillage.

4. Dispositif selon l'une quelconque des revendications 1 à 3, **caractérisé en ce que** les moyens de verrouillage comportent un second organe (6) de verrouillage apte à coulisser longitudinalement sur le cylindre (3), respectivement sur la tige (2).

5. Dispositif selon la revendication 4, **caractérisé en ce que** le second organe (6) de verrouillage a la forme générale d'une bague apte à être déplacée en rotation autour de son axe sensiblement confondu avec l'axe longitudinal du vérin (2, 3), pour faire coopérer en accrochage ou non au moins une portion de la bague (6) avec l'organe de support (4) afin de définir les positions active et inactive.

6. Dispositif selon l'une quelconque des revendications 1 à 5, **caractérisé en ce que** les moyens (5, 6) de verrouillage sont disposés sur un carter (11) fixé sur le cylindre (3), respectivement sur la tige (2), le carter (11) coopérant en coulissement avec l'organe (4) support lors des déplacements du vérin (2, 3) et étant conformé pour permettre aux moyens (5, 6) de verrouillage de coopérer au moins partiellement avec l'organe de support (4).

7. Dispositif selon l'une quelconque des revendications 1 à 6, **caractérisé en ce que** l'organe (4) support comporte une ligne crantée telle qu'une crémaillère qui s'étend sur au moins une partie de la longueur de la tige (2), respectivement du cylindre (3), la ligne crantée étant prévue pour permettre l'accrochage des moyens (5, 6) de verrouillage dans une pluralité de positions longitudinales déterminées.

8. Véhicule comportant un hayon, **caractérisé en ce qu'**il comporte au moins un dispositif d'assistance à l'ouverture ou à la fermeture conforme à l'une quelconque des revendications précédentes.

## Patentansprüche

1. Vorrichtung vom Typ Zylinder, die das Öffnen oder Schließen eines Flügels wie beispielsweise einer Heckklappe eines Kraftfahrzeugs unterstützt und einen Kolben (1) aufweist, der am Ende einer Stange (2) angeordnet ist und in einem Zylinder (3) gleitet, der ein Fluid enthält, sowie Mittel zum Halten des Zylinders (1, 2, 3) in mindestens einer stabilen Ausfahrposition zwischen den äußersten Anschlagpositionen des Hubendes, wobei die Haltemittel Verriegelungsmittel (5, 6) aufweisen, die vom Zylinder (3) beziehungsweise von der Stange (2) getragen werden und wahlweise in eine aktive oder inaktive Position gebracht werden können, welche einer Verbindung in Translation mit der Stange (2) beziehungsweise dem Zylinder (3) oder dem Nicht-Vorliegen einer solchen Verbindung entsprechen, wobei die Verriegelungsmittel das Ausfahren des Zylinders (1, 2, 3) in einer bestimmten Position blockieren können, wobei die Haltemittel ein mit der Stange (2) beziehungsweise dem Zylinder (3) fest verbundenes Trägerorgan (4) aufweisen, wobei die Verriegelungsmittel (5, 6) wahlweise in eine aktive oder eine inaktive Position gebracht werden können, die einer Verbindung beziehungsweise einer fehlenden Verbindung mit dem Trägerorgan (4) entsprechen, wobei die Haltemittel mindestens einen Anschlag (7, 8) aufweisen, der vom Zylinder (3) beziehungsweise von der Stange (2) getragen wird und die Bewegung der Verriegelungsmittel (5, 6) blockieren kann, um das Ausfahren des Zylinders (1, 2, 3) in einer bestimmten Position zu begrenzen, wobei die Verriegelungsmittel (5, 6) ein erstes Verriegelungsorgan (5) aufweisen, das gegenüber dem Zylinder (3) beziehungsweise der Stange (2) in Längsrichtung blockiert wird, **dadurch gekennzeichnet, dass** das erste Verriegelungsorgan (5) die allgemeine Form eines Rings besitzt, der um seine im Wesentlichen mit der Längsachse des Zylinders (2, 3) zusammenfallende Achse gedreht werden kann, um mindestens einen Abschnitt (17) des Rings (5) zum Zusammenwirken oder Nicht-Zusammenwirken durch Festhaken mit dem Trägerorgan (4) zu bringen und die aktive oder inaktive Position festzulegen.

2. Vorrichtung nach Anspruch 1, **dadurch gekennzeichnet, dass** sie elastische Dämpfmittel (10) zwischen dem Trägerorgan (4) und der Stange (2) beziehungsweise dem Zylinder (3) aufweist, die eine leichte relative Bewegung zwischen diesen erlauben.

3. Vorrichtung nach Anspruch 1, **dadurch gekennzeichnet, dass** das erste Verriegelungsorgan (5) in Längsrichtung von zwei Anschlägen (7, 8) blockiert wird, die vom Zylinder (3) beziehungsweise von der Stange (2) getragen werden und auf beiden Seiten des ersten Verriegelungsorgans (5) angeordnet sind.

4. Vorrichtung nach einem der Ansprüche 1 bis 3, **dadurch gekennzeichnet, dass** die Verriegelungsmittel ein zweites Verriegelungsorgan (6) aufweisen, das in Längsrichtung am Zylinder (3) beziehungsweise an der Stange (2) gleiten kann.

5. Vorrichtung nach Anspruch 4, **dadurch gekennzeichnet, dass** das zweite Verriegelungsorgan (6) die allgemeine Form eines Rings besitzt, der um seine im Wesentlichen mit der Längsachse des Zylinders (2, 3) zusammenfallende Achse gedreht werden kann, um mindestens einen Abschnitt des Rings (6) zum Zusammenwirken oder Nicht-Zusammenwirken durch Festhaken mit dem Trägerorgan (4) zu bringen und die aktive und die inaktive Position festzulegen.

6. Vorrichtung nach einem der Ansprüche 1 bis 5, **dadurch gekennzeichnet, dass** die Verriegelungsmittel (5, 6) an einem Gehäuse (11) angeordnet sind, das am Zylinder (3) beziehungsweise an der Stange (2) befestigt ist und bei den Bewegungen des Zylinders (2, 3) gleitend mit dem Trägerorgan (4) zusammenwirkt und so ausgebildet ist, dass es den Verriegelungsmitteln (5, 6) erlaubt, zumindest teilweise mit dem Trägerorgan (4) zusammenzuwirken.

7. Vorrichtung nach einem der Ansprüche 1 bis 6, **dadurch gekennzeichnet, dass** das Trägerorgan (4) eine gezahnte Linie aufweist, beispielsweise eine Zahnstange, die sich über mindestens einen Längenabschnitt der Stange (2) beziehungsweise des Zylinders (3) erstreckt, wobei die gezahnte Linie das Festhaken der Verriegelungsmittel (5, 6) in einer Vielzahl bestimmter Längspositionen erlaubt.

8. Fahrzeug mit einer Heckklappe, **dadurch gekennzeichnet, dass** es mindestens eine Vorrichtung zur Unterstützung des Öffnens oder Schließens nach einem der vorhergehenden Ansprüche aufweist.

## Claims

1. Device for assisting with the opening or closing of an opening such as a motor vehicle tailgate, of the jack type comprising a piston (1) located at the end of a rod (2) and sliding inside a cylinder (3) containing a fluid, means for holding the jack (1, 2, 3) in at least one stable intermediate deployment position between the outermost end-of-travel stop positions, the holding means comprising locking means (5, 6) carried by the cylinder (3) and the rod (2) respectively, the locking means (5, 6) being capable of being placed selectively in an active position or an inactive position corresponding respectively to whether or not they are made integral in translation with the rod (2) or the cylinder (3) respectively, and capable of locking the deployment of the jack (1, 2, 3) in a predetermined position, the holding means comprising a support member (4) integral with the rod (2) or the cylinder (3) respectively, the locking means (5, 6) being capable of being placed selectively in an active position or an inactive position corresponding respectively whether or not they are made integral with the support member (4), the holding means comprising at least one stop (7, 8) carried by the cylinder (3) and the rod (2) respectively, and capable of locking the displacement of the locking means (5, 6), in order to limit the deployment of the jack (1, 2, 3) to a predetermined position, the locking means (5, 6) comprising a first locking member (5) locked longitudinally with respect to the cylinder (3) and the rod (2) respectively, **characterised in that** the first locking member (5) has the general shape of a ring capable of being displaced in rotation about its axis, which is substantially the same as the longitudinal axis of the jack (2, 3), in order to cause at least one portion (17) of the ring (5) to co-operate with the support member (4) by catching on, or not, so as to define the active or inactive positions.

2. Device according to Claim 1, **characterised in that** it comprises resilient damping means (10) placed between the support member (4) and the rod (2) or the cylinder (3) respectively, capable of allowing a small amount of relative clearance between the latter.

3. Device according to Claim 1 **characterised in that** the first locking member (5) is locked longitudinally by two stops (7, 8) carried by the cylinder (3) and the rod (2) respectively, and located on either side of the first locking member (5).

4. Device according to any one of Claims 1 to 3, **characterised in that** the locking means comprise a second locking member (6) capable of sliding longitudinally over the cylinder (3) or the rod (2) respectively.

5. Device according to Claim 4, **characterised in that** the second locking member (6) has the general shape of a ring capable of being displaced in rotation about its axis, which is substantially the same as the longitudinal axis of the jack (2, 3), in order to cause at least one portion of the ring (6) to co-operate with the support member (4) by catching on, or not, so as to define the active and inactive positions.

6. Device according to any one of Claims 1 to 5, **characterised in that** the locking means (5, 6) are arranged on a casing (11) fixed to the cylinder (3) or the rod (2) respectively, the casing (11) co-operating in a sliding manner with the support member (4) when the jack (2, 3) is displaced and being shaped so as to allow the locking means (5, 6) to co-operate at least partly with the support member (4).

7. Device according to any one of Claims 1 to 6, **characterised in that** the support member (4) comprises a notched line such as a toothed rack, which extends over at least part of the length of the rod (2) or the cylinder (3) respectively, the notched line being designed to allow the engagement of the locking means (5, 6) in a plurality of predetermined longitudinal positions.

8. Vehicle comprising a tailgate, **characterised in that** it comprises at least one device for assisting with opening or closing in accordance with any one of the preceding claims.
